# EUROPÄISCHE PATENTSCHRIFT

(11) **EP 4 111 142 B1**
(45) Veröffentlichungstag und Bekanntmachung des Hinweises auf die Patenterteilung: **02.10.2024**
(21) Anmeldenummer: 21704695.2
(22) Anmeldetag: 09.02.2021
(51) Int. Cl.: G01F 1/10, G01F 1/12, E03B 7/07, F17D 3/01

(54) **VERFAHREN ZUR DRUCKVERLUSTREGULIERUNG FÜR SYSTEME IN FLUIDFÜHRENDEN ROHRLEITUNGEN**
METHOD FOR PRESSURE LOSS REGULATION FOR SYSTEMS IN FLUID-CONDUCTING PIPELINES
PROCÉDÉ POUR RÉGULER LES PERTES DE PRESSION POUR DES SYSTÈMES DANS DES CONDUITES TUBULAIRES ACHEMINANT DES SUBSTANCES FLUIDES

(30) Priorität: 28.02.2020 DE 102020105327
(43) Veröffentlichungstag der Anmeldung: 04.01.2023
(73) Patentinhaber: PYDRO GmbH, 18119 Rostock-Warnemünde (DE)
(72) Erfinder: LINARES, Miguel, 22761 Hamburg (DE); SICHONE, Mulundu, 18055 Rostock (DE)
(74) Vertreter: Grünbaum, Annekathrin
(86) Internationale Anmeldenummer: PCT/EP2021/053028
(87) Internationale Veröffentlichungsnummer: WO 2021/170389

(56) Entgegenhaltungen:
- DE-A1- 19 535 683
- DE-A1- 2 158 100
- GB-A- 2 452 721
- JP-A- H0 688 736

## Beschreibung

Die Erfindung betrifft ein Verfahren und eine Vorrichtung zur Druckverlustregulierung für Systeme in fluidführenden Rohrleitungen, insbesondere für Systeme aufweisend Flügelräder.

Durchfluss- und Mengenmessungen in geschlossenen Rohrleitungen umfassen ein umfangreiches Gebiet unterschiedlichster Verfahren und physikalischer Methoden und Effekte, die zur jeweiligen Messung genutzt werden können.

Aus dem Stand der Technik bekannte Messgeräte sind beispielsweise Flügelrad-Durchflussmesser, welche zum Messen und Überwachen von Flüssigkeiten eingesetzt werden. Einfache Flügelrad-Durchflussmesser können als Hauswasserzähler und Wohnungswasserzähler benutzt werden, dienen aber auch in Heißwasserausführung als Volumenmessteil für kleinere Wärmemengenzähler. Großwasserzähler dagegen, wie beispielsweise Woltmann Zähler, sind für Nenndurchflussmengen (Qn) von 15 m³/h bis 1500 m³/h geeignet. Woltmann Zähler arbeiten nach dem vom deutschen Wasserbauingenieur Reinhard Woltmann 1790 beschriebenen Prinzip der Messung von Strömungen mittels hydrometrischer Flügel. Typische Rohrdurchmesser reichen von Nennweiten DN 50 bis DN 500.

Aus dem Stand der Technik ist bekannt, das angeströmte Flügelräder in fluidführenden Rohrleitungen abhängig von der Strömungsgeschwindigkeit, einen Druckverlust im Rohr, insbesondere hinter dem Messgerät, verursachen.

Je nach Anwendungsfall des drehbar gelagerten Flügelrades, gibt es technisch-wirtschaftliche Nachteile, die mit den durch das Flügelrad verursachten Druckverlusten verbunden sind. Diese Nachteile haben sowohl auf die Einrichtungen mit Flügelrad selbst, als auch auf die Strömungsbedingungen in der Rohrleitung eine Auswirkung. Folglich verursacht eine Erhöhung der Strömung in einem Rohr, in dem ein drehbar gelagertes Flügelrad installiert ist, zumindest zwei Probleme: 1. das durchströmende Wasser verliert Druck und 2. es werden axiale Kräfte erzeugt, die dazu führen das mechanische Halterungen wie Lager und Buchsen stärker verschleißen. Eine Rohrturbine, welche beispielsweise für einen eingeschränkten Drehzahlbereich ausgelegt ist, kann durch eine zu hohe Strömungsgeschwindigkeit beschädigt werden, da diese durch den resultierenden Druckabfall, über die Auslegung hinaus, mehr elektrischer Energie und axialen Kräften ausgesetzt wird. Zudem erzeugen angeströmte Flügelräder Druckverlust in der Rohrleitung, die wiederum zur Erhöhung der für den Fluidtransport erforderlichen Pumpenergie führen können.

Die derzeit im Stand der Technik aufgeführten Systeme zur Reduzierung der Druckverluste bestehen aus zusätzlichen mechanischen Regulierteilen, die weitere konstruktive mechanische Bauteile aufweisen und daher wiederum den Wartungsaufwand erhöhen.

Um die Nachteile des Standes der Technik zu beseitigen sind im Stand der Technik Lösungen offenbart: Beispielsweise ist in der Offenbarungsschrift EP0693675B1 ein Woltmann Zähler mit einem zwischen einer stromauf angeordneten Nabe und einer stromab angeordneten Nabe in einem rohrförmigen Element drehbar gelagerten Flügelrad offenbart. Das angeströmte Flügelrad des Woltmann Zählers erzeugt, je nach Strömungsgeschwindigkeit, einen Druckverlust in der Rohrleitung. Die Offenbarung weist ein mechanisches Regulierteil auf, welches eine Wirkung auf die Drehzahl des Flügelrades hat und somit auch die Druckverluste regulieren könnte.

Ferner ist aus der Offenbarungsschrift US20190136826A1 eine Rohrturbine bekannt, welche ein Flügelrad aufweist, welches Energie aus dem Druck des fließenden Wassers erzeugt und dadurch einen Druckabfall verursacht. Um den Nachteilen eines über die Auslegung oder den Betrieb hinausgehenden Druckabfalls entgegen zu wirken, weist die in der Schrift beschriebene Lösung eine Drehzahlbegrenzungsvorrichtung für die Turbineneinheit vor, wobei die Drehzahlbegrenzungsvorrichtung mindestens ein flexibles Element umfasst, welches mit der Turbineneinheit verbunden ist, um einen Bypass zu erzeugen und so den Durchfluss des durch den Rotor fließenden Fluids zu begrenzen.

DE2158100A1 offenbart einen rotierenden Drehkolben- oder Turbinendurchflussmesser zur genauen Messung des Volumendurchflusses von Gasen oder Flüssigkeiten in Rohrleitungen und strömungstechnischen Anlagen, dadurch gekennzeichnet das dem rotierenden Element über einen geregelten Antrieb Energie zugeführt wird, wobei die Energiezufuhr über die Antriebsdrehzahl so einreguliert wird, dass der Druckverlust über dem Durchflussmesser bei gleichem Rohrquerschnitt der Zu- und Abflussleitung verschwindet.

### Darstellung der Erfindung

Es ist daher Aufgabe der Erfindung die Nachteile des Standes der Technik zu beseitigen und ein Verfahren zur Druckverlustregulierung bereit zu stellen mittels welchem Druckverluste in einem Rohrsystem, hervorgerufen durch in Einrichtungen angeordnete beweglich gelagerte Bauteile, reduziert und Verschleiß- und Abnutzungserscheinungen an beweglich gelagerten Bauteilen verringert werden.

Es ist zudem Aufgabe der Erfindung eine einfache und robuste Vorrichtung zur Durchführung des Verfahrens zur Druckverlustregulierung bereit zu stellen, welche sowohl eine in einem Rohrsystem angeordnete Einrichtung aufweisend beweglich gelagerte Bauteile, welche Druckverluste in dem Rohrsystem hervorrufen, vor Verschleiß- und Abnutzungserscheinungen schützt und/oder auftretende Druckverluste reduziert. Die Lösung dieser Aufgabe erfolgt durch die in den Ansprüchen aufgeführten Merkmale.

Das erfindungsgemäße Verfahren zur Druckverlustregulierung gemäß Anspruch 1 ist für einen Einsatz in einem fluidführenden Rohrsystem, welches zumindest ein beweglich gelagertes Bauteil aufweist, bestimmt, wobei das beweglich gelagerte Bauteil selbst einen Druckverlust im fluidführenden Rohrsystem verursacht. Das zumindest eine beweglich gelagerte Bauteil ist hierbei mit einem elektromechanischen Wandler gekoppelt. In dem Verfahren wird mittels einer elektrischen Steuerung der elektromechanische Wandler abhängig von einer im Rohrsystem vorliegenden Druckdifferenz und/oder abhängig von einem im Rohrsystem vorliegenden Durchfluss in einen Betriebsmodus gefahren, wobei ein Betriebsmodus ein Motorbetrieb, ein Generatorbetrieb oder ein Leerlaufbetrieb ist.

Gemäß verschiedenen Ausführungsformen ist das beweglich gelagerte Bauteil ein rotierendes Bauteil, beispielsweise ein Flügelrad und/oder eine Rohrturbine.

Gemäß verschiedenen Ausführungsformen wird die Druckdifferenz aus einem Druck, welcher vor dem beweglich gelagerten Bauteil und einem Druck, welcher hinter dem beweglich gelagerten Bauteil herrscht, gebildet. In einem Verfahrensschritt können hierfür mittels Sensoren die herrschenden Drücke im Rohrsystem gemessen werden.

Ferner kann im erfindungsgemäßen Verfahren eine Drehzahlsteuerung im Motorbetrieb und/oder im Generatorbetrieb des elektromechanischen Wandlers vorgenommen werden.

Die erfindungsgemäße Vorrichtung gemäß Anspruch 5 zur Durchführung des Verfahrens zur Druckverlustregulierung in einem fluidführenden Rohrsystem weist ein Rohrelement/eine Rohrturbine zur Durchflussmessung zum Einbau in ein fluidführendes Rohrsystem auf. Ferner weist die Vorrichtung zumindest ein beweglich gelagertes Bauteil auf, welches in dem Rohrelement angeordnet ist und im fluidführenden Rohrsystem selbst einen Druckverlust verursacht. Das zumindest eine beweglich gelagerte Bauelement ist mit zumindest einem elektromechanischen Wandler gekoppelt. Eine Steuerungseinheit ist dafür ausgebildet, den elektromechanischen Wandler abhängig von einer im Rohrelement herrschenden Druckdifferenz und/oder einem im Rohrsystem herrschenden Durchflusses in einen Betriebsmodus zu versetzen, wobei ein Betriebsmodus ein Motorbetrieb, ein Generatorbetrieb oder ein Leerlaufbetrieb ist. Weitere Betriebsmodi sind denkbar.

Gemäß verschiedenen Ausführungsbeispielen weist die Vorrichtung ferner zumindest ein stromspeicherndes Element auf. Hierbei ist die Verwendung von Batterien und/oder Akkumulatoren denkbar. Es ist denkbar, dass das stromspeichernde Element vom Generator gespeist wird.

Gemäß verschiedenen Ausführungsbeispielen weist die Vorrichtung eine Sensoreinheit auf, wobei die Sensoreinheit dafür ausgebildet ist Druckverlustmessungen und/oder Druckmessungen im Rohrsystem durchzuführen. Ferner kann die Sensoreinheit dafür ausgebildet sein Durchflussmengen und/oder Messungen von Parametern zur Bestimmung einer Wasserqualität durchzuführen.

Für die Druckmessungen wird der Druck (P1) vor und der Druck (P2) hinter dem beweglich gelagerten Bauteil, welches beispielsweise ein Flügelrad und/oder ein Woltmann Zähler ist, beispielsweise mittels zweier Absolutdrucksensoren und/oder Relativdrucksensoren und/oder mittels einem Differenzdrucksensor gemessen.

Ferner kann die Vorrichtung zur Durchführung des erfindungsgemäßen Verfahrens ein Computerprogramm verwenden, welches die Sensordaten zur Druckverlustbestimmung auswertet und anhand der gemessenen Werte und/oder anhand vordefinierter Sollwerte den zumindest einen elektromechanischen Wandler in den entsprechenden Betriebsmodus fährt. Beispielsweise erkennt das Computerprogramm, dass der Druckabfall z.B. im Rotor einer Rohrturbine einen bestimmten Wert überschreitet. In diesem Fall wird der Stator der Rohrturbine elektrisch entkoppelt, der elektromechanische Wandler wird in den Leerlaufbetrieb gefahren. Durch die Entkopplung wird das Drehmoment der Rohrturbine reduziert und das Flügelrad dreht sich unter Leerlaufbedingungen und erzeugt sowohl einen geringeren Druckabfall als auch weniger Axialkräfte.

Durch das Umschalten der Betriebsmodi vom Generatorbetrieb in den Motorbetrieb, kann das beweglich gelagerte Bauteil als Pumpe betrieben werden, um durch die Steuerung der Drehzahl die Druckverluste zu neutralisieren.

Das erfindungsgemäße Verfahren bzw. die erfindungsgemäße Vorrichtung kann auch mit Woltmann Zähler verwendet werden, in dem das Flügelrad des Woltmann Zähler mit einem Motor/Generator verbunden wird, der mit einer Drehzahlsteuerung ausgestattet ist. Ähnlich wie bei der beschriebenen Rohrturbine bzw. dem beweglich gelagerten Bauteil, wird der Woltmann Zähler durch Antrieb als Pumpe betrieben, um durch die Steuerung der Drehzahl die Druckverluste zu neutralisieren.

Der Vorteil dieser Erfindung ist, dass weniger konstruktive Teile benötigt werden und dadurch der Wartungsaufwand reduziert wird.

Des Weiteren ermöglicht die Erfindung sowohl eine Neutralisierung des Druckverlusts als auch die dezentrale Erhöhung des Drucks in der Rohrleitung und damit einen effizienteren Transport von Fluiden.

### Ausführung der Erfindung

Die Erfindung wird anhand von Ausführungsbeispielen näher erläutert.

Hierzu zeigen
- Figur 1: eine Rohrturbine mit Flügelrad, installiert in einer Rohrleitung
- Figur 2: Explosionszeichnung der Rohrturbine
- Figur 3: Blockdiagramm der Rohrturbine
- Figur 4: Flussdiagramm zur Illustrierung der software-basierten

### Druckverlustregulierung der Rohrturbine

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" zum Beschreiben verwendet sowohl einer direkten als auch einer indirekten Verbindung (beispielsweise ohmsch und/oder elektrisch leitfähig, z.B. in einer elektrisch leitfähigen Verbindung), eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

Gemäß verschiedenen Ausführungsformen kann der Begriff "gekoppelt" oder "Kopplung" im Sinne einer mechanischen, hydrostatischen, thermischen und/oder elektrischen Verbindung verstanden werden. Gemäß verschiedenen Ausführungsformen kann "gekuppelt" im Sinne einer mechanischen (körperlichen bzw. physikalischen) Kopplung verstanden werden. Eine Kupplung kann eingerichtet sein, um eine mechanische Wechselwirkung (z.B. Kraft, Drehmoment) zu übertragen.

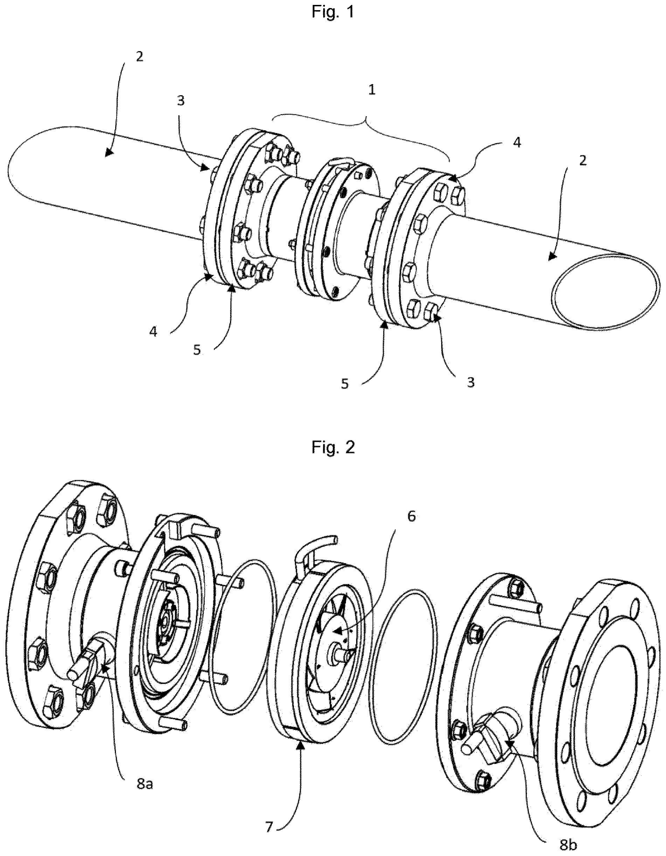

In Figur 1 ist eine erfindungsgemäße Vorrichtung dargestellt. Figur 1 zeigt eine Rohrturbine 1 ist in einem fluidführenden Rohrsystem/Rohrleitung 2, welche über eine Flanschverbindung zwischen Flanschen 4 und 5 mittels einer Schraubverbindung 3 verbunden sind.

Figur 2 zeigt eine erfindungsgemäße Vorrichtung zur Durchführung des Verfahrens zur Druckverlustregulierung in einem fluidführenden Rohrsystem 2, wobei die Vorrichtung eine Rohrturbine 1 zur Durchflussmessung zum Einbau in ein fluidführendes Rohrsystem 2 aufweist. Die Vorrichtung weist ferner zumindest ein beweglich gelagertes Bauteil 6 auf, welches in der Rohrturbine 1 angeordnet ist und im fluidführenden Rohrsystem 2 einen Druckverlust verursacht und mit zumindest einem elektromechanischen Wandler 7 gekoppelt ist. Ferner weist die Vorrichtung eine Steuerungseinheit auf (hier nicht dargestellt), welche dafür ausgebildet ist, den elektromechanischen Wandler 7 abhängig von einer in der Rohrturbine 1 herrschenden Druckdifferenz ΔP in einen Betriebsmodus zu versetzen, wobei ein Betriebsmodus ein Motorbetrieb, ein Generatorbetrieb oder ein Leerlaufbetrieb ist.

Gemäß verschiedenen Ausführungsformen ist das zumindest eine beweglich gelagerte Bauteil 6 ein Bauteil, welches eine Rotationsbewegung ausführt, beispielsweise ein Flügelrad oder eine Turbine.

Gemäß verschiedenen Ausführungsbeispielen weist die Vorrichtung zumindest ein stromspeicherndes Element (hier nicht dargestellt) auf, wobei das zumindest eine stromspeichernde Element Batterien und/oder Akkumulatoren aufweisen kann.

Gemäß verschiedenen Ausführungsformen weist die Vorrichtung eine Sensoreinheit (hier nicht dargestellt) auf, wobei die Sensoreinheit dafür ausgebildet ist Druckverlustmessungen und/oder Druckmessungen im Rohrsystem 2 und/oder Durchflussmengen und/oder Messungen von Parametern zur Bestimmung einer Wasserqualität durchzuführen.

Für die Druckmessungen im wird der Druck (P1) vor und der Druck (P2) hinter dem beweglich gelagerten Bauteil 6, welches beispielsweise ein Flügelrad und/oder ein Woltmann Zähler ist, mittels Drucksensoren 8a/8b, beispielsweise Absolutdrucksensoren und/oder Relativdrucksensoren und/oder mittels einem Differenzdrucksensor gemessen.

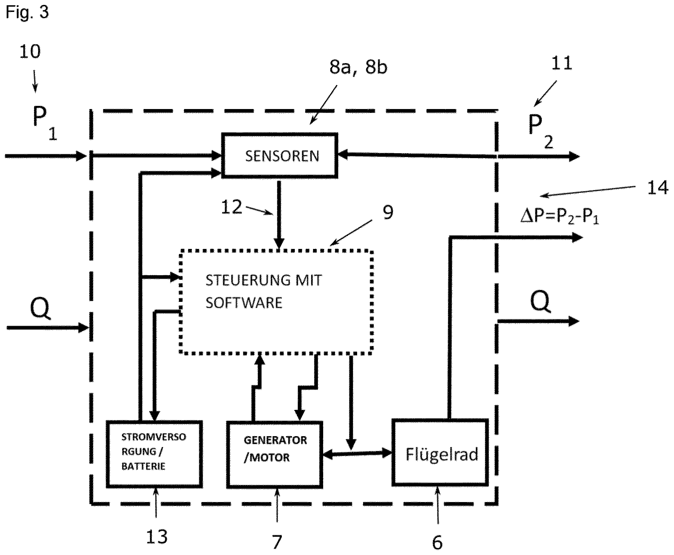

Figur 3 zeigt ein Blockdiagramm zur Funktionsweise der erfindungsgemäßen Vorrichtung anhand dessen die Druckverlustregulierung im Folgenden erläutert wird: Ein Fluid, beispielsweise Wasser, welches das beweglich gelagerte Bauteil 6, beispielsweise ein Flügelrad, in Rotation versetzt, tritt mit einem Volumenstrom Q über einen Eingangsquerschnitt in die Rohrturbine 1 ein und über einen Ausgangsquerschnitt aus der Rohrturbine 1 wieder aus. Mit Hilfe der in Fig. 2 gezeigten Drucksensoren 8a und 8b wird ein Eingangsdruck 10 vor dem beweglich gelagerten Bauteil 6 bzw. ein Ausgangsdruck 11 nach dem beweglich gelagerten Bauteil 6 erfasst und über Kabelverbindungen 12 zur Berechnung des durch das beweglich gelagerte Bauteil 6 verursachten Druckverlustes 15 in der Steuerung mit einer Software 9 herangezogen. Basierend auf den Druckverlust 15 wird der elektromechanische Wandler 7 über die Steuerung mit Software 9 entweder durch Entkopplung in den Leerlaufbetrieb oder durch Rückspeisung von Energie aus der Energiequelle 13 in den Motorbetrieb versetzt. Durch Ansteuerung des elektromechanischen Energiewandlers kann so die Drehzahl des beweglich gelagerten Bauteils 6 und damit auch die Druckverluste software-basiert reguliert werden.

Gemäß verschiedenen Ausführungsformen wird im erfindungsgemäßen Verfahren zur Druckverlustregulierung in einem fluidführenden Rohrsystem 2 mittels einer elektrischen Steuerung ein elektromechanische Wandler abhängig von einer im Rohrsystem 2 vorliegenden Druckdifferenz ΔP in einen Betriebsmodus gefahren, wobei ein Betriebsmodus ein Motorbetrieb, ein Generatorbetrieb oder ein Leerlaufbetrieb ist. Ein beweglich gelagertes Bauteil 6, welches mit dem zumindest einem elektromechanischen Wandler 7 gekoppelt ist verursacht hierbei den Druckverlust im Rohrsystem 2, wobei das beweglich gelagerte Bauteil 6 ein Flügelrad und/oder ein Woltmann Zähler ist.

Die Druckdifferenz ΔP wird gebildet aus einem Druck P1, welcher vor dem beweglich gelagerten Bauteil 6 und einem Druck P2, welcher nach dem beweglich gelagerten Bauteil im Rohrsystem 2 herrscht.

Ferner kann das Verfahren eine Drehzahlsteuerung des elektromechanischen Wandlers im Motorbetrieb aufweisen, um eine feinere Abstufung der Druckverlustminimierung zu erreichen.

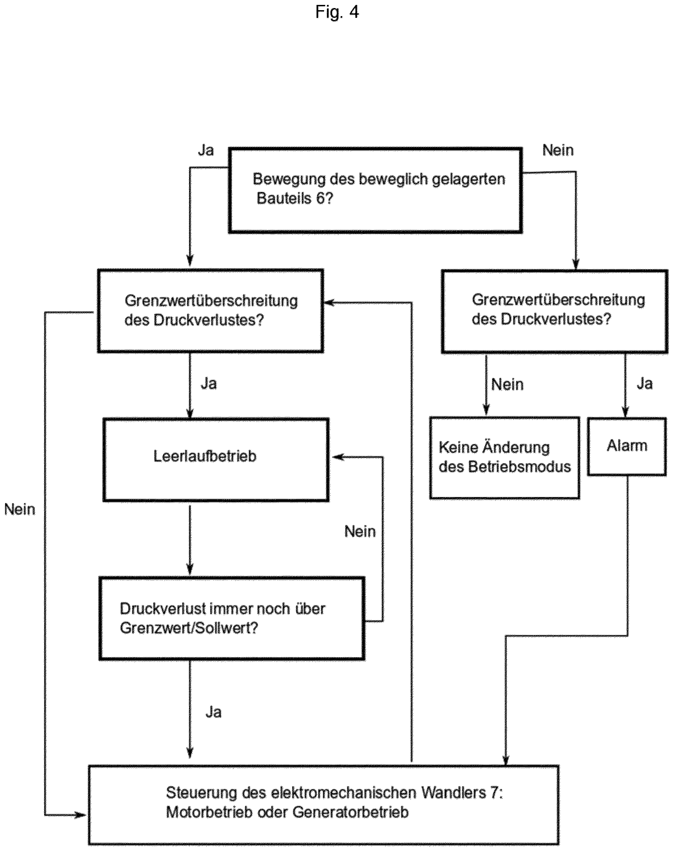

Figur 4 zeigt ein Ablaufdiagramm des erfindungsgemäßen Verfahrens: Zunächst wird überprüft, ob sich das beweglich gelagerte Bauteil 6 überhaupt bewegt oder nicht. Für den Fall, dass es sich nicht bewegt, erfolgt eine Messung des Druckverlustes und/oder der Druckdifferenz ΔP und es erfolgt ein Vergleich mit Sollwerten. Werden Sollwerte überschritten, wird ein Alarmsignal ausgesendet. In diesem Fall besteht die Möglichkeit das beweglich gelagerte Bauteil durch Verwendung des elektromechanischen Wandlers 7 im Motorbetrieb in Bewegung zu versetzen und auf diese Art und Weise zu erreichen, dass das beweglich gelagerte Bauteile 6 wie eine Pumpe wirkt, so dass die alarmierende Druckdifferenz neutralisiert wird.

Für den Fall, dass keine Sollwerte überschritten werden, wird am laufenden System nichts geändert: Das beweglich gelagerte Bauteil muss nicht abgebremst oder beschleunigt werden, es kann sich weiter so drehen. Es erfolgt keine Ansteuerung des elektromechanischen Wandlers 7.

Für den Fall, dass sich das beweglich gelagerte Bauteil 6 bewegt, wird wiederum geprüft, ob eine Grenzwertüberschreitung des Druckverlustes und/oder der herrschenden Druckdifferenzen ΔP vorliegt. Liegt eine Grenzüberschreitung vor, wird der Betriebsmodus des elektromechanischen Wandlers in den Leerlaufbetrieb umgeschaltet. Gemäß verschiedenen Ausführungsbeispielen erfolgt nun eine Abfrage des Durchflusses, wonach dieser mit einem Sollwertverglichen wird. Ist der gemessene Durchfluss nicht unter einem Wert, welcher einen Druckabfall verursacht bleibt der elektromechanische Wandler im Leerlaufmodus. Überschreitet die Druckdifferenz trotz Leerlaufmodus den Sollwert, so kann das beweglich gelagerte Bauteil in den Motorbetrieb versetzt werden, um wie eine Pumpe zu wirken und den Druckverlust zu neutralisieren.

Für den Fall, dass keine Grenzwertüberschreitung bei einem beweglich gelagerten Bauteil 6 vorliegt, erfolgt eine (drehzahlabhängige) Steuerung des elektromechanischen Wandlers 7 derart, dass das beweglich gelagerte Bauteil 6 abgebremst oder beschleunigt wird.

### Bezugszeichen

1. Rohrturbine zur Durchflussmessung
2. Rohrleitung/Rohrsystem
3. Schraubverbindung
4. Flansche der Rohrleitung
5. Flansche der Rohrturbine
6. Flügelrad der Rohrturbine
7. Generator
8. Absolutdrucksensoren
   a. Absolutdrucksensor vor beweglich gelagertem Bauteil
   b. Absolutdrucksensoren nach beweglich gelagertem Bauteil
9. Steuerung mit Software
10. Eingangsdruck
11. Ausgangsdruck
12. Kabelverbindungen zwischen Sensor und Steuerung
13. Batteriespeicher / Stromnetzanbindung
14. Druckverlust durch Flügelrad

## Patentansprüche

1. Verfahren zur Druckverlustregulierung in einem fluidführenden Rohrsystem (2) aufweisend zumindest ein beweglich gelagertes Bauteil (6), welches mit zumindest einem elektromechanischen Wandler (7) gekoppelt ist, wobei das beweglich gelagerte Bauteil (6) selbst eine Druckdifferenz ΔP im Rohrsystem (2) verursacht, wobei mittels einer elektrischen Steuerung der elektromechanische Wandler (7) abhängig von der durch das Bauteil (6) verursachten Druckdifferenz ΔP im Rohrsystem (2) in einen Betriebsmodus gefahren wird, **dadurch gekennzeichnet, dass** der Betriebsmodus ein Generatorbetrieb ist, wenn keine Grenzwertüberschreitung des Druckverlusts vorliegt, oder ein Leerlaufbetrieb ist, wenn eine Grenzwertüberschreitung des Druckverlusts vorliegt oder ein Motorbetrieb ist, wenn eine Grenzwertüberschreitung des Druckverlusts trotz Leerlaufbetrieb vorliegt.

2. Verfahren nach Anspruch 1, **dadurch gekennzeichnet, dass** das beweglich gelagerte Bauteil (6) ein Flügelrad ist.

3. Verfahren nach einem der vorhergehenden Ansprüche, **dadurch gekennzeichnet, dass** die Druckdifferenz ΔP gebildet wird aus einem gemessenen Druck P1 vor dem beweglich gelagerten Bauteil (6) und einem gemessenen Druck P2 nach dem beweglich gelagerten Bauteil (6).

4. Verfahren nach einem der vorhergehenden Ansprüche, ferner aufweisend eine Drehzahlsteuerung des elektromechanischen Wandlers (7) im Motorbetrieb und/oder im Generatorbetrieb.

5. Vorrichtung zur Durchführung des Verfahrens zur Druckverlustregulierung in einem fluidführenden Rohrsystem (2) gemäß Anspruch 1, die Vorrichtung aufweisend eine Rohrturbine (1) zur Durchflussmessung zum Einbau in ein fluidführendes Rohrsystem (2), ferner aufweisend zumindest ein beweglich gelagertes Bauteil (6), welches in der Rohrturbine (1) angeordnet ist und wobei das beweglich gelagerte Bauteil (6) im fluidführenden Rohrsystem (2) eine Druckdifferenz ΔP verursacht und mit zumindest einem elektromechanischen Wandler (7) gekoppelt ist, eine Steuerungseinheit, welche dafür ausgebildet ist den elektromechanischen Wandler (7) abhängig von der durch das Bauteil (6) verursachten Druckdifferenz ΔP im Rohrsystem (2) in einen Betriebsmodus zu versetzen, wobei der Betriebsmodus ein Generatorbetrieb ist, wenn keine Grenzwertüberschreitung des Druckverlusts vorliegt, oder ein Leerlaufbetrieb ist, wenn eine Grenzwertüberschreitung des Druckverlusts vorliegt oder ein Motorbetrieb ist, wenn eine Grenzwertüberschreitung des Druckverlusts trotz Leerlaufbetrieb vorliegt.

6. Vorrichtung gemäß Anspruch 5, ferner aufweisend zumindest ein stromspeicherndes Element.

7. Vorrichtung nach Anspruch 5 oder 6, ferner aufweisend eine Sensoreinheit.

8. Vorrichtung nach Anspruch 7, **dadurch gekennzeichnet, dass** die Sensoreinheit dafür ausgebildet ist Druckverlustmessungen und/oder Druckmessungen im Rohrsystem (2) durchzuführen.

9. Vorrichtung nach Anspruch 7, **dadurch gekennzeichnet, dass** die Sensoreinheit dafür ausgebildet Durchflussmengen durchzuführen.

10. Vorrichtung nach Anspruch 7, **dadurch gekennzeichnet, dass** die Sensoreinheit dafür ausgebildet ist Messungen von Parametern zur Bestimmung einer Wasserqualität durchzuführen.

## Claims

1. Method for pressure loss regulation in a fluid-conducting pipe system (2) having at least one movably mounted component (6) which is coupled to at least one electromechanical transducer (7), wherein the movably mounted component (6) itself creates a pressure difference ΔP in the pipe system (2), wherein the electromechanical transducer (7) is moved to an operating mode depending on the pressure difference ΔP, created by the component (6), in the pipe system (2) by means of an electrical controller, **characterized in that** the operating mode is generator operation if the pressure loss does not exceed a limit value or is no-load operation if the pressure loss exceeds a limit value or is motor operation if the pressure loss exceeds a limit value in spite of no-load operation.

2. Method according to Claim 1, **characterized in that** the movably mounted component (6) is an impeller.

3. Method according to either of the preceding claims, **characterized in that** the pressure difference ΔP is formed from a measured pressure P1 upstream of the movably mounted component (6) and a measured pressure P2 downstream of the movably mounted component (6).

4. Method according to any of the preceding claims, further comprising rotation speed control of the electromechanical transducer (7) during motor operation and/or during generator operation.

5. Device for carrying out the method for pressure loss regulation in a fluid-conducting pipe system (2) according to Claim 1, the device having a pipe turbine (1) for throughflow measurement for installation into a fluid-conducting pipe system (2), further having at least one movably mounted component (6) which is arranged in the pipe turbine (1) and wherein the movably mounted component (6) creates a pressure difference ΔP in the fluid-conducting pipe system (2) and is coupled to at least one electromechanical transducer (7), a control unit which is designed to shift the electromechanical transducer (7) to an operating mode depending on the pressure difference ΔP, created by the component (6), in the pipe system (2) by means of an electrical controller, wherein the operating mode is generator operation if the pressure loss does not exceed a limit value or is no-load operation if the pressure loss exceeds a limit value or is motor operation if the pressure loss exceeds a limit value in spite of no-load operation.

6. Device according to Claim 5, further having at least one current-storing element.

7. Device according to Claim 5 or 6, further having a sensor unit.

8. Device according to Claim 7, **characterized in that** the sensor unit is designed to carry out pressure loss measurements and/or pressure measurements in the pipe system (2).

9. Device according to Claim 7, **characterized in that** the sensor unit is designed to conduct throughflow quantities.

10. Device according to Claim 7, **characterized in that** the sensor unit is designed to carry out measurements of parameters for determining a water quality.

## Revendications

1. Procédé permettant de réguler la perte de pression dans un système de tuyauterie (2) transportant un fluide, présentant au moins un composant (6) monté mobile qui est couplé à au moins un convertisseur électromagnétique (7), dans lequel le composant (6) monté mobile lui-même provoque une différence de pression ΔP dans le système de tuyauterie (2), dans lequel le convertisseur électromagnétique (7) est utilisé dans un mode de fonctionnement au moyen d'une commande électrique en fonction de la différence de pression ΔP dans le système de tuyauterie (2) provoquée par le composant (6),
**caractérisé en ce que** le mode de fonctionnement est un fonctionnement de générateur quand aucun dépassement de valeur limite de la perte de pression n'est donné ou est un fonctionnement à vide quand un dépassement de valeur limite de la perte de pression est donné ou est un fonctionnement de moteur quand un dépassement de valeur limite de la perte de pression est donné malgré un fonctionnement à vide.

2. Procédé selon la revendication 1, **caractérisé en ce que** le composant (6) monté mobile est une roue à aubes.

3. Procédé selon l'une quelconque des revendications précédentes, **caractérisé en ce que** la différence de pression ΔP est formée à partir d'une pression mesurée P1 en amont du composant (6) monté mobile et d'une pression mesurée P2 en aval du composant (6) monté mobile.

4. Procédé selon l'une quelconque des revendications précédentes, présentant en outre une commande de vitesse de rotation du convertisseur électromagnétique (7) en fonctionnement de moteur et/ou en fonctionnement de générateur.

5. Dispositif permettant d'exécuter le procédé de régulation de perte de pression dans un système de tuyauterie transportant un fluide (2) selon la revendication 1, le dispositif présentant
une turbine bulbe (1) pour mesurer le débit, à installer dans un système de tuyauterie (2) transportant un fluide,
en outre au moins un composant (6) monté mobile qui est disposé dans la turbine bulbe (1), et dans lequel le composant (6) monté mobile provoque une différence de pression ΔP dans le système de tuyauterie (2) transportant un fluide et est couplé à au moins un convertisseur électromagnétique (7),
une unité de commande qui est réalisée pour mettre le convertisseur électromagnétique (7) dans un mode de fonctionnement en fonction de la différence de pression ΔP dans le système de tuyauterie (2) provoquée par le composant (6), dans lequel le mode de fonctionnement est un fonctionnement de générateur si aucun dépassement de valeur limite de la perte de pression n'est donné, ou est un fonctionnement à vide si un dépassement de valeur limite de la perte de pression est donné, ou est un fonctionnement de moteur si un dépassement de valeur limite de la perte de pression est donné malgré le fonctionnement à vide.

6. Dispositif selon la revendication 5, présentant en outre au moins un élément accumulateur de courant.

7. Dispositif selon la revendication 5 ou 6, présentant en outre une unité de capteur.

8. Dispositif selon la revendication 7, **caractérisé en ce que** l'unité de capteur est réalisée pour exécuter des mesures de perte de pression et/ou des mesures de pression dans le système de tuyauterie (2).

9. Dispositif selon la revendication 7, **caractérisé en ce que** l'unité de capteur est réalisée pour exécuter des mesures de débit.

10. Dispositif selon la revendication 7, **caractérisé en ce que** l'unité de capteur est réalisée pour exécuter des mesures de paramètres pour déterminer une qualité de l'eau.
